# EUROPÄISCHE PATENTANMELDUNG

(11) **EP 1 351 109 A1**
(43) Veröffentlichungstag der Anmeldung: **08.10.2003**
(21) Anmeldenummer: 03006674.0
(22) Anmeldetag: 25.03.2003
(51) Int. Cl.: G05B 19/05

(54) **Integriertes Entwurfs-, Programmier- und Dokumentationssystem für Automatisierungsgeräte**

(30) Priorität: 05.04.2002 DE 10215196
(71) Anmelder: SIEMENS AKTIENGESELLSCHAFT, 80333 München (DE)
(72) Erfinder: Herkert, Gebhard, 74838 Limbach (DE)

(57) **Zusammenfassung**

Die Erfindung betrifft ein System und ein Verfahren zur Programmierung und/oder zum Betreiben eines Automatisierungssystems mit einem Programmiersystem/Methode, das den technologischen Ablauf wie eine Schrittkette (bzw. Flow-Chart) präsentiert, aber wie eine Verknüpfungslogik funktioniert. Für eine aufwandsarme Programmierung des Automatisierungssystems bei gleichzeitig hoher Datenkonsistenz wird vorgeschlagen, dass zur Programmierung des Automatisierungssystems ein auf einer Datenverarbeitungsvorrichtung ablauffähiges Datenprogramm DP vorgesehen ist, das zum Zeitpunkt des Ablaufs direkt aus einem speziellen Ablaufplan gebildet wird, der die Abläufe des auszuführenden Programms sowie den Abläufen zugeordnete Verknüpfungslogik enthält. Hierdurch ergibt sich eine ablauforientierte Verknüpfungslogik, die sowohl für Entwurf, Programmierung und/oder Dokumentation des Datenprogramms des Automatisierungssystems einsetzbar ist. Die Abläufe sowie die den Abläufen zugeordnete Verknüpfungslogik basieren dabei auf einer einzigen Datenablage, sodass sich bei Programmänderungen im Gegensatz zu bisherigen Lösungen mit verschiedenen Datenbasen für Entwurf, Programmierung und/oder Dokumentation keinerlei Dateninkonsistenzen ergeben.

## Beschreibung

Die Erfindung betrifft System und Verfahren zur Programmierung von Automatisierungssystemen sowie ein Computerprogrammprodukt zur Durchführung eines derartigen Verfahrens.

Eine derartiges System kommt insbesondere im Bereich der Automatisierungstechnik zum Einsatz. Für die Erstellung, Bearbeitung, Analyse und Anzeige eines derartigen Automatisierungsprogramms kommen Programmierwerkzeuge zum Einsatz, die auf einer Datenverarbeitungsvorrichtung ablauffähig sind und in der Lage sind, das Automatisierungsprogramm, bzw. einen Teil eines Automatisierungsprogramms graphisch anzuzeigen. Hierzu sind verschiedene Darstellungsarten für das Automatisierungsprogramm möglich, beispielsweise Struktogramme, Zustandsautomaten, Stromlaufpläne, Funktionspläne etc. Manche Automatisierungsprogramme sind in der Lage auf verschiedene Arten dargestellt zu werden, beispielsweise als Struktogramm oder als Programm-Ablaufplan, als Stromlaufplan oder als Funktionsplan.

Der Erfindung liegt die Aufgabe zugrunde, eine aufwandsarme Programmierung des Automatisierungssystems bei gleichzeitig hoher Datenkonsistenz zu ermöglichen.

Diese Aufgabe wird durch ein System, ein Verfahren sowie ein Computerprogrammprodukt mit den in den Ansprüchen 1, 6, 13 bzw. 14 angegebenen Merkmalen gelöst.

Der Erfindung liegt die Erkenntnis zugrunde, dass die bisherigen im Bereich der Automatisierungstechnik verwendeten Programmiertechniken wie beispielsweise eine ablauf-, eine verknüpfungsorientierte Programmierung häufig Probleme bezüglich einer Datenkonsistenz aufweisen. Eine derartige mangelhafte Datenkonsistenz ergibt sich insbesondere dadurch, dass Daten, die beispielsweise von einen Planer einer Automatisierungslösung erstellt werden, vom Programmierer der Automatisierungslösung und/oder vom Tester der Automatisierungslösung immer wieder in unterschiedliche Darstellungen und Dokumentationen umgesetzt wird. In der Regel entstehen unterschiedliche Dokumente die jeweils keinerlei Verbindung miteinander aufweisen. Eine derartige mangelhafte Datenkonsistenz wird erfindungsgemäß dadurch vermieden, dass das Datenprogramm, welches die Automatisierungslösung enthält, als ablauforientierte Verknüpfungslogik ausgebildet ist. Die ablauforientierte Verknüpfungslogik besteht dabei zum einen aus einem Ablaufplan mit dem jeweiligen verfahrenstechnischen Ablauf, wobei mit dem Ablaufplan und den hierin vorhandenen Abläufen eine jeweils erforderliche Verknüpfungslogik programmtechnisch verwoben ist. Auf diese Weise kann mit Hilfe der Erstellung eines einzigen Dokuments in Form der ablauforientierten Verknüpfungslogik eine gesamte Automatisierungslösung sowohl dokumentiert als auch programmiert werden. Insgesamt ergibt sich somit eine Kombination der Darstellung von Ablaufsteuerungen und der rechnerinternen Bearbeitungslogik von Verknüpfungssteuerungen, es erfolgen dabei Entwurf, die Programmierung und die Dokumentation von Verknüpfungssteuerungen in einem Arbeitsschritt und basierend auf einer einzigen Datenablage, so dass sich insgesamt eine aufwandsarme Programmierung eines Automatisierungssystems bei gleichzeitig höchster Datenkonsistenz ergibt.

Eine hohe Effizienz wird dadurch erzielt, dass die ablauforientierte Verknüpfungslogik des Datenprogramms sowohl für Entwurf, Programmierung und/oder Dokumentation vorgesehen ist.

Der Aufwand insbesondere bei der Datenpflege beispielsweise bei Änderungen wird auf wirkungsvolle Weise dadurch sichergestellt, dass das aus den Abläufen und aus der den Abläufen zugeordneten Verknüpfungslogik gebildete Datenprogramm mit der ablauforientierten Verknüpfungslogik auf einer einzigen Datenablage basiert.

Eine übersichtliche und damit anwenderfreundliche Handhabung des Systems wird dadurch erzielt, dass der Ablaufplan aus Zuständen und Zustandsübergängen gebildet wird, wobei einem Zustand und/oder einem Zustandsübergang eine Lupenfunktion zuordenbar ist, die Verknüpfungen für den zugeordneten Zustand und/oder für den zugeordneten Zustandsübergang enthält.

Bei einer vorteilhaften Ausgestaltung sind die durch die Lupenfunktion editierbaren Verknüpfungen in einer Verknüpfungssprache und/oder in einer ablauforientierten Verknüpfungssprache realisiert. Hierdurch wird es möglich, auch ohne Vorkenntnisse bisher verwendete Basissprachen wie Kontaktplan KOP, Funktionsliste FUP, Anweisungsliste AWL und andere in das System ohne Aufwand einzubinden.

Eine einfache Realisierung des System ergibt sich dadurch, dass das System erste Mittel zur Erzeugung einer Ablaufstruktur aus Zuständen und Zustandsübergängen zumindest für verfahrenstechnische Teilabläufe des Automatisierungssystems, und zweite Mittel zur Erzeugung von den Zuständen und/oder den Zustandsübergängen zuordenbaren Zusatzinformationen aufweist. Hierdurch ergibt sich ein Datenprogramm mit einer klar darstellbaren Ablauflogik für das Automatisierungssystem.

Eine aufwandsarme Programmierung einer speicherprogrammierbaren Steuerung eines Automatisierungssystems wird dadurch erzielt, dass die mittels der ersten und zweiten Mittel erzeugte Ablaufstruktur ein Datenprogramm mit einer ablauforientierten Verknüpfungslogik bildet, das zum Ablauf auf mindestens einer speicherprogrammierbaren Steuerung des Automatisierungssystems vorgesehen ist.

Eine anwenderfreundliche Generierung der ablauforientierten Verknüpfungslogik unter weitestgehender Nutzung vorhandener Erfahrungen eines Anwenders wird dadurch erzielt, dass zur Erzeugung der Ablaufstruktur erste Softwarekomponenten zur Kennzeichnung eines Zustandes und/oder eines Zustandsübergangs und zweite Softwarekomponenten zur Erzeugung der Zusatzinformationen vorgesehen sind.

Eine übersichtliche Vereinigung von Ablaufstruktur und Verknüpfungslogik kann in der Weise erfolgen, dass mindestens einem ersten Softwareobjekte eine Lupenfunktion zuordenbar ist, über die das zweite Softwareobjekt editierbar ist.

Vorteilhafte Hauptbestandteile einer ablauforientierten Verknüpfungslogik ergeben sich dadurch, sind dass das System als erste Softwareobjekte einen ersten Objekttyp "Aktion" zur Kennzeichnung eines Zustandes und einen zweiten Objekttyp "Transition" zur Kennzeichnung eines Zustandsübergangs aufweist.

Eine aufwandsarme Programmierung wird dadurch sichergestellt, dass die ersten und zweiten Mittel in der Weise ausgestaltet sind, dass Entwurf, Programmierung und Dokumentation der Ablaufstruktur im wesentlichen in einem Arbeitsschritt erfolgt.

Ein einheitlicher Datenstand wird für die jeweiligen Anforderungen wird dadurch sichergestellt, dadurch dass Entwurf, Programmierung und Dokumentation der Ablaufstruktur auf einer einzigen Datenablage basieren.

Im folgenden wird die Erfindung anhand der in den Figuren dargestellten Ausführungsbeispiele näher beschrieben und erläutert.

Es zeigen:
- FIG 1: ein Blockschaltbild zum Grundaufbau eines Automatisierungssystems,
- FIG 2: eine schematische Darstellung zum Ablauf bei der Erstellung einer ablauforientierten Verknüpfungslogik,
- FIG 3: eine beispielhafte Prinzipdarstellung für eine ablauforientierte Verknüpfungslogik,
- FIG 4: einen Übersichtsbild für einen Ablauf am Beispiel einer Waagenbefüllung und
- FIG 5: eine ablauforientierte Verknüpfungslogik für das in Fig. 4 gezeigte Beispiel.

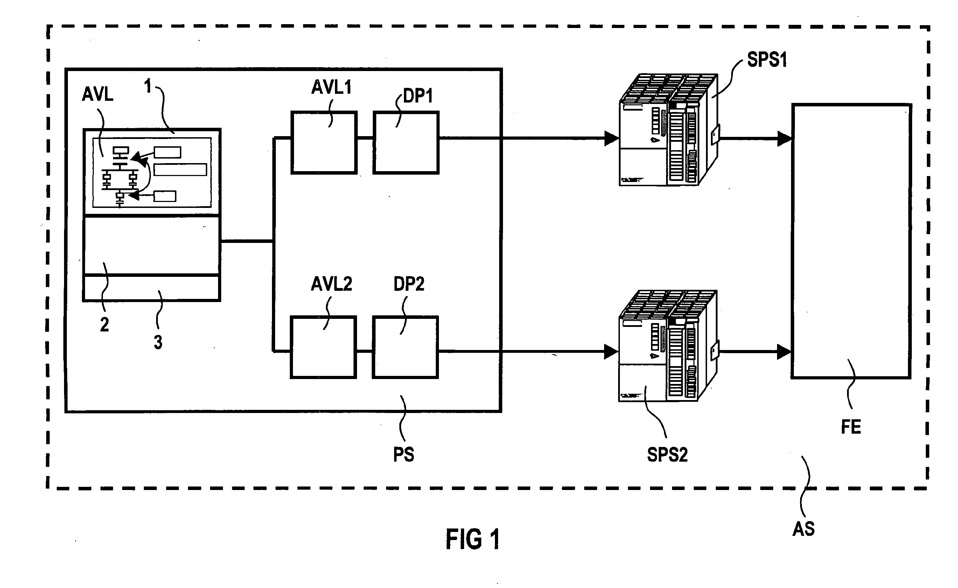

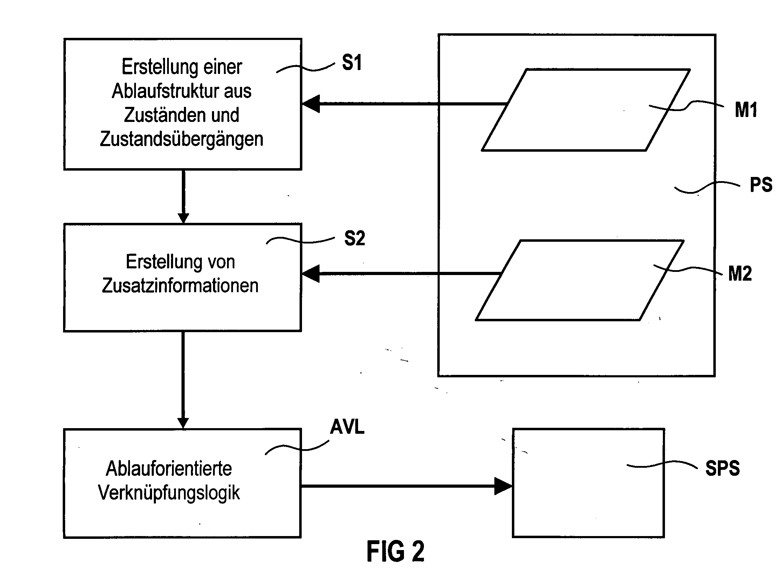

FIG 1 zeigt eine Prinzipdarstellung eines Blockschaltbilds zur Programmierung eines Automatisierungssystems AS. Das Automatisierungssystem AS besteht aus einem Programmiersystem PS, aus einer ersten speicherprogrammierbaren Steuerung SPS1, aus einer zweiten speicherprogrammierbaren Steuerung SPS2 sowie aus einer Fertigungseinrichtung FE. Das Programmiersystem PS dient der Erstellung von einem ersten Datenprogramm DP1, welches auf der ersten speicherprogrammierbaren Steuerung SPS1 ablauffähig ist sowie zur Programmierung eines zweiten Datenprogramms DP2, welches auf der zweiten speicherprogrammierbaren Steuerung SPS2 ablauffähig ist. Die Programmierung des ersten und zweiten Datenprogramms DP1,DP2 erfolgt mit Hilfe eines Computers 1,2,3, der aus einem Rechner 2, einer zugehörigen Tastatur 3 sowie einem zugehörigen Bildschirm 1 gebildet wird. Auf dem Bildschirm 1 des Rechners 1,2,3 ist beispielhaft eine ablauforientierte Verknüpfungslogik AVL dargestellt, die im Zusammenhang mit den Figuren 2 bis 5 noch ausführlich beschrieben wird. Die Besonderheit des in FIG 1 dargestellten Ausführungsbeispiels liegt darin, dass sowohl das erste Datenprogramm DP1, als auch das zweite Datenprogramm DP2 jeweils auf einer ablauforientierten Verknüpfungslogik AVL1,AVL2 basieren.

Mit Hilfe der Rechnereinheit 1,2,3 erfolgt die Programmierung der ablauforientierten Verknüpfungslogik AVL1, AVL2. Hierbei wird in einem speziellen auf dem Rechner 1,2,3 ablauffähigen Engineering-Tool eine Schrittkette, beispielsweise in Form eines Flow-Charts erzeugt, die den technologischen Ablauf der hiermit zu programmierenden Fertigungseinrichtung FE repräsentiert. In diesen technologischen Ablauf, d.h. in dieses Flow-Chart ist jedoch gleichzeitig eine Verknüpfungslogik integriert, die beispielsweise das Verhalten einer Automatisierungslösung im Fehlerfall erfasst etc.. Auch beispielsweise bei reversiblen Prozessen mit vielen Sonderzuständen können die jeweiligen Erfordernisse mittels der Verknüpfungslogik erfasst werden. Die ablauforientierte Verknüpfungslogik basiert dabei jeweils auf einer Datenquelle, d.h. Änderungen in der ablauforientierten Verknüpfungslogik finden somit automatisch Berücksichtigung beim Entwurf, bei der Programmierung und bei der Dokumentation der Automatisierungslösung, so dass darin Inkonsistenzen nicht nur vermieden, sondern vielmehr sogar ganz unmöglich werden.

FIG 2 zeigt eine schematische Darstellung zum Ablauf bei der Erstellung einer ablauforientierten Verknüpfungslogik mit Hilfe des bereits in FIG 1 gezeigten Programmiersystems PS. Ziel des Programmiersystems PS ist dabei die Generierung einer ablauforientierten Verknüpfungslogik AVL in Form eines auf einer speicherprogrammierbaren Steuerung SPS ablauffähigen Datenprogramms (vergleiche FIG 1). Hierzu weist das Programmiersystem PS erste Mittel M1 auf. Mit Hilfe der ersten Mittel M1 erfolgt in einem Schritt S1 die Erstellung einer Ablaufstruktur aus Zuständen und Zustandsübergängen einer Automatisierungslösung. Mit Hilfe weiterer Mittel M2 des Programmiersystems PS erfolgt in einem Schritt S2 die Erstellung von Zusatzinformationen. Als Ergebnis der durchgeführten Schritte S1,S2 ergibt sich nach Generierung der gesamten Ablaufstruktur der zur programmierenden Automatisierungslösung die ablauforientierte Verknüpfungslogik AVL, d.h. ein Datenprogramm, welches auf einer speicherprogrammierbaren Steuerung SPS ablauffähig ist. Die Besonderheit der in FIG 2 dargestellten Vorgehensweise besteht darin, dass die im Schritt S1 sowie im Schritt S2 erzeugten Daten zielgerecht in einem einzigen Dokument, nämlich der ablauforientierten Verknüpfungslogik AVL Verwendung finden und dort somit in einer einzigen Datenablage vorhanden sind. Hierdurch ergibt sich gegenüber singulären separaten ablauforientierten Programmierungen bzw. einer separaten verknüpfungsorientierten Programmierung eine nicht zu unterschätzende Datensicherheit und auch wesentlich verringerter Pflegeaufwand bezüglich Datenpflege für Entwurf, Programmierung und Dokumentation.

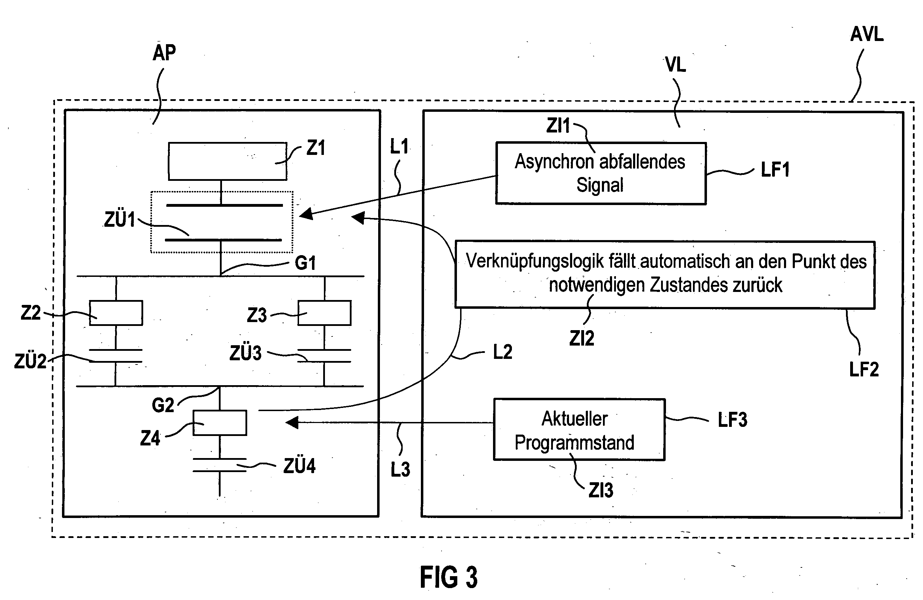

FIG 3 zeigt ein Beispiel einer ablauforientierten Verknüpfungslogik AVL in Prinzipdarstellung. Die ablauforientierte Verknüpfungslogik AVL besteht zum einen aus einem Ablaufplan AP mit einem verfahrenstechnischen Ablauf einer schematisch dargestellten Automatisierungslösung. Der Ablaufplan AP besteht aus Zuständen Z1..Z4 sowie aus Zustandübergängen ZÜ1..ZÜ4. Zwischen dem Zustandübergang ZÜ1 und den Zuständen Z2,Z3 befindet sich eine erste Verzweigung G1 und zwischen den Zustandsübergängen ZÜ2, ZÜ3 sowie dem Zustand Z4 eine zweite Verzweigung G2. Die ablauforientierte Verknüpfungslogik AVL weist darüber hinaus eine Verknüpfungslogik VL auf, die im wesentlichen aus einzelnen Zuständen bzw. einzelnen Zustandübergängen des Ablaufplans AP zugeordneten Zusatzinformationen ZI1..ZI3 besteht. Die Zusatzinformationen ZI1..ZI3 sind jeweils in den Zuständen Z1..Z4 bzw. den Zustandsübergängen ZÜ1..ZÜ4 zuordenbaren Lupenfunktionen LF1..LF3 enthalten. Die Verknüpfung der Zusatzinformationen ZI1..ZI3 mit den jeweiligen Zuständen Z1..Z4 bzw. den Zustandsübergängen ZÜ1..ZÜ4 erfolgt über in FIG 3 als Pfeile dargestellte Links L1..L3.

Das in FIG 3 gezeigte Ausführungsbeispiel veranschaulicht die wesentlichen Grundprinzipien der ablauforientierten Verknüpfungslogik. Die Grundprinzipien bestehen in einer Verknüpfung des Ablaufplans AP mit einer Verknüpfungslogik VL innerhalb eines einzigen Dokuments. Der Ablaufplan AP ist dabei zunächst aufgebaut wie beispielsweise ein Kontaktplan. Die einzelnen Kontakte, d.h. Zustände Z1..Z4 bzw. Zustandsübergänge ZÜ1..ZÜ4 sind jedoch "mächtiger" gestaltet, nämlich wie die Transitionen bei einer Schrittkette. Hinter jedem Kontakt bzw. hinter jeder Transition steht nämlich eine Lupenfunktion LF1..LF3 die wiederum in Basissprachen einer verknüpfungsorientierten Programmierung wie beispielsweise Kontaktplan KOP, Funktionsplanliste FUP, Anweisungsliste AWL, Structure Component List SCL oder wiederum auch in einer ablauforientierten Verknüpfungslogik AVL realisiert werden kann. In FIG 3 ist weiter veranschaulicht, dass neben den Kontakten und Transitionen in Form der Zustände Z1..Z3 sowie Zustandübergänge ZÜ1..ZÜ4 in die Verknüpfungskette des Ablaufplans AP beliebige Schaltstellen eingefügt werden können, wie'die Aktionen einer Schrittkette. Als Schaltfunktionen können dabei beispielsweise vorgesehen werden:
- Transition (mit Lupenfunktion)
- Aktion (mit Lupenfunktion)
- Halteglied (mit Lupenfunktion)
- und -Verknüpfung (Parallele)
- oder -Verknüpfung
- exklusive oder XOR (Alternative)
- Verzweigung (Fork)
- Link (Verknüpfung)

Die ablauforientierte Verknüpfungslogik AVL stellt somit eine neue gemeinsame technologieorientierte Beschreibungssprache für Automatisierungslösungen dar und ist somit Basis eines neuartigen Engineering-Tools, welches insbesondere auch ein interdisziplinäres Arbeiten im Bereich der Verknüpfungssteuerungen ermöglicht. Sowohl die Dokumentation des verfahrentechnischen Ablaufes, als auch die Verknüpfungslogik erfolgen dabei über dasselbe Tool und über dieselbe Datenquelle. Bei der Realisierung der ablauforientierten Verknüpfungslogik AVL kann dabei auf bekannten Engineering-Systemen wie beispielsweise den Editoren PCS7-SFC oder Graph 7 der Firma Siemens AG aufgebaut werden. Auch bezüglich einer Realisierung im sogenannten Runtime-System kann ebenfalls durch eine Modifikation der SFC- und/oder Graph 7-Module eine sogenannte AVL-Engine zur Erzeugung einer ablauforientierten Verknüpfungslogik aufgesetzt werden.

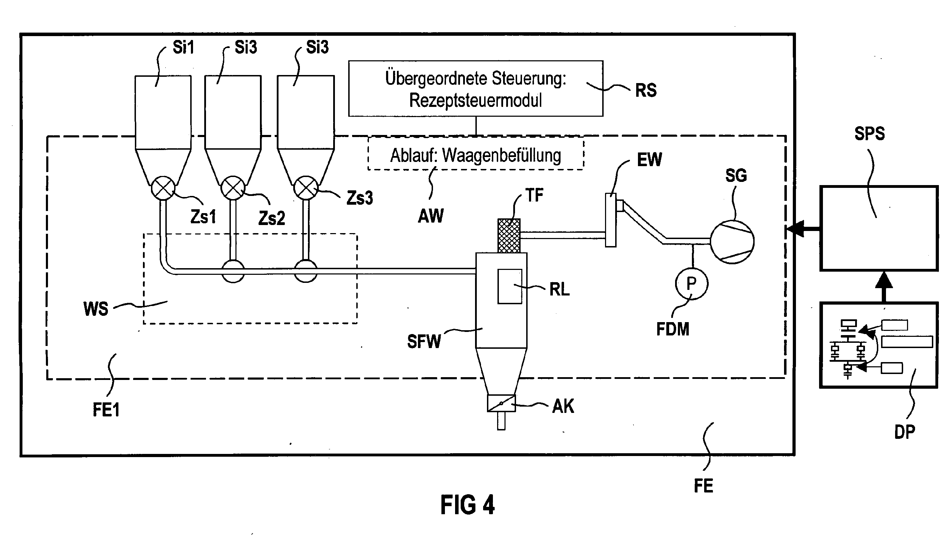

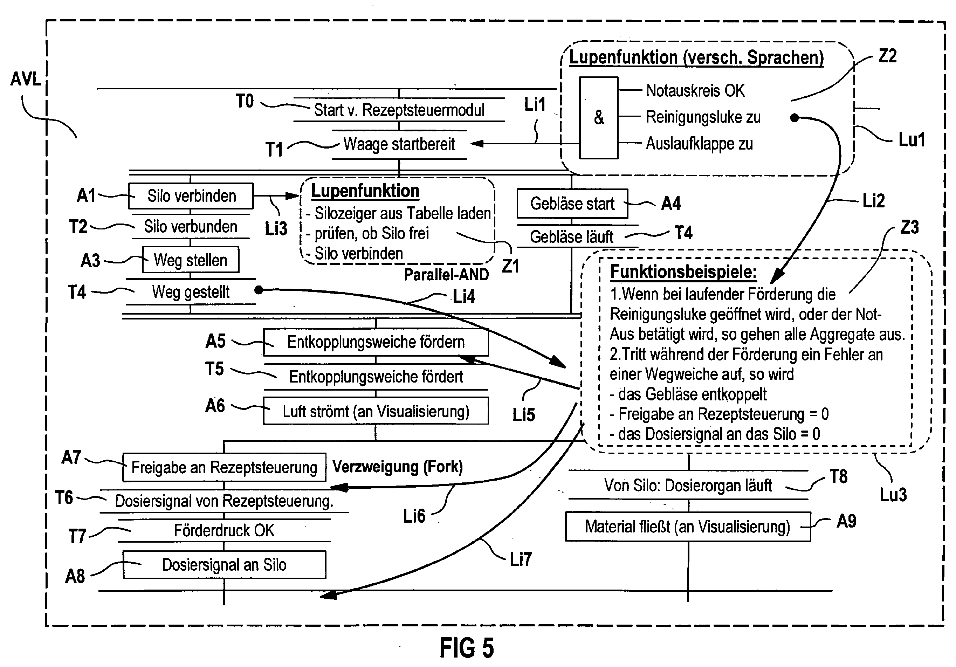

FIG 4 zeigt ein Übersichtsbild für eine Automatisierungslösung, die mittels einer ablauforientierten Verknüpfungslogik programmiert wird (vergleiche FIG 5). Die in FIG 4 dargestellte Automatisierungslösung dient der Programmierung einer Fertigungseinrichtung FE. Die Fertigungseinrichtung FE dient einer Waagenbefüllung. Die Fertigungseinrichtung FE wird mittels einer speicherprogrammierbaren Steuerung SPS, auf der ein Datenprogramm DP in ablauforientierter Verknüpfungslogik ablauffähig ist, programmiert. Dabei wird als Ausschnitt der Fertigungseinrichtung FE lediglich der Teilausschnitt FE1, nämlich der Waagenbefüllung näher betrachtet. Der Waagenbefüllung übergeordnet ist eine übergeordnete Steuerung RS, ein sogenannten Rezeptsteuermodul. Die in FIG 4 dargestellte Fertigungseinrichtung FE1 besteht aus einem ersten Silo Si1, einem zweiten Silo Si2 und einem dritten Silo Si3. Am unteren Ende der Silos Si1..Si3 befinden sich jeweils sogenannten Zellradschleusen ZS1..ZS3, über die Material aus dem jeweiligen Silo Si1..Si3 über ein Wegsystem WS zu einer Saugförderwaage SFW transportierbar ist. Am Ausgang der Saugförderwaage SFW befindet sich eine Auslaufklappe AK, während im oberen Bereich der Saugförderwaage SFW eine Reinigungsluke RL vorhanden ist. Im oberen Bereich der Saugförderwaage ist darüber hinaus ein Trennfilter EF vorgesehen, welches mit einer Entkopplungsweiche EW, einem Sauggebläse SG sowie einer Förderdruckmessung FDM funktionell in Verbindung steht.

Die Besonderheit des in FIG 4 dargestellten Prozessautomatisierungssystems besteht darin, dass die Programmierung der Automatisierungslösung der Fertigungseinrichtung FE mittels der ablauforientierten Verknüpfungslogik des Datenprogramms DP erfolgt, wie im Zusammenhang mit FIG 5 noch weiter erläutert wird.

FIG 5 zeigt eine beispielhafte ablauforientierte Verknüpfungslogik für das Ausführungsbeispiel der Fertigungseinrichtung FE1 der in FIG 4 dargestellten Waagenbefüllung. Die ablauforientierte Verknüpfungslogik AVL besteht aus einem Ablaufplan mit Zuständen A1..A9 sowie Zustandsübergängen T1..T8. Mit den einzelnen Modulen des Ablaufplans verwoben sind Zusatzinformationen Z1..Z3, die über Lupenfunktionen LU1..LU3 und Links LI1..LI7 mit dem Ablaufplan verwoben sind. So betrifft der erste Zustandübergang T0, der im folgenden auch als Transition bezeichnet wird, den Start vom Rezeptsteuermodul (vergleiche FIG 4). Der folgende Zustandübergang T1 betrifft den Zustandübergang "Waage" startbereit. Die Transition T1 ist über einen Link Li1 mit der Lupenfunktion LU1 datentechnisch verbunden. Die Lupenfunktion LU1 enthält die Zusatzinformation Z2 in Form einer Und-Verknüpfung aus "Not-AUS-Kreis-o.k.", "Reinigungsluke zu" und "Auslaufklappe zu". Am Ende der Transition T1 erfolgt eine Verzweigung in Aktionen A2, A3 mit Transitionen T2,T3, welche die Verbindung der Silos und der Ansteuerung des zugehörigen Wegsystems (vergleiche FIG 4) betreffen. Zugehörige Zusatzinformationen Z1 befinden sich in der Lupenfunktion LU2 und sind über einen Link LI3 mit der Aktion A2 verlinkt. Die zweite Verzweigung betrifft die Gebläsesteuerung mit Hilfe der Aktion A4 und der Transition T4. In ähnlicher Weise enthält die ablauforientierte Verknüpfungslogik die weiteren Aktionen A5..A8 sowie die Transitionen T5..T8, die zum einen die Betriebsweise der Entkopplungsweiche und die Rezeptsteuerung mit Dosiervorgang betreffen. Die Zusatzinformationen Z2 der Lupenfunktion LU1 sind darüber hinaus mit weiteren Zusatzinformationen Z3 einer weiteren Lupenfunktion LU3 über einen Link LI2 verknüpft. Hierdurch wird angedeutet, dass auch den Informationen der Verknüpfungslogik, beispielsweise den Zusatzinformationen Z2 der Lupenfunktion LU1 weitere Zusatzinformationen Z3 über die Lupenfunktion LU3 unterlagert werden können usw..

Zusammenfassend betrifft die Erfindung somit ein System und ein Verfahren zur Programmierung und/oder zum Betreiben eines Automatisierungssystems. Für eine aufwandsarme Programmierung des Automatisierungssystems bei gleichzeitig hoher Datenkonsistenz wird vorgeschlagen, dass zur Programmierung des Automatisierungssystems ein auf einer Datenverarbeitungsvorrichtung ablauffähiges Datenprogramm DP vorgesehen ist, das zum Zeitpunkt des Ablaufs direkt aus einem speziellen Ablaufplan gebildet wird, der die Abläufe des auszuführenden Programms sowie den Abläufen zugeordnete Verknüpfungslogik enthält. Hierdurch ergibt sich eine ablauforientierte Verknüpfungslogik, die sowohl für Entwurf, Programmierung und/oder Dokumentation des Datenprogramms des Automatisierungssystems einsetzbar ist. Die Abläufe sowie die den Abläufen zugeordnete Verknüpfungslogik basieren dabei auf einer einzigen Datenablage, sodass sich bei Programmänderungen im Gegensatz zu bisherigen Lösungen mit verschiedenen Datenbasen für Entwurf, Programmierung und/oder Dokumentation keinerlei Dateninkonsistenzen ergeben.

Die neue Idee besteht in einem Engineering-Tool / Methode, das den technologischen Ablauf wie eine Schrittkette (bzw. Flow-Chart) präsentiert, aber wie eine Verknüpfungslogik funktioniert. Hierzu ist ein System zur Erstellung und Programmierung eines Computerprogramms sowie ein Ablaufsystem zur Ausführung des Computerprogramms erforderlich.

## Patentansprüche

1. System (PS) zur Programmierung eines Automatisierungssystems (AS), wobei zur Programmierung des Automatisierungssystems ein auf einer Datenverarbeitungsvorrichtung ablauffähiges Datenprogramm (DP) vorgesehen ist,
**dadurch gekennzeichnet,**
**dass** das Datenprogramm (DP) eine ablauforientierte Verknüpfungslogik (AVL) aufweist, die aus einem Ablaufplan (AP) mit einem verfahrenstechnischen Ablauf (Z1..Z4; ZÜ1..ZÜ4) und einer den Abläufen (Z1..Z4; ZÜ1..ZÜ4) zuordenbaren Verknüpfungslogik (VL; LF1.. LF3) gebildet wird.

2. System nach Anspruch 1,
**dadurch gekennzeichnet,**
**dass** die ablauforientierte Verknüpfungslogik des Datenprogramms (DP) sowohl für Entwurf, Programmierung und/oder Dokumentation insbesondere von Verknüpfungssteuerungen vorgesehen ist.

3. System nach einem der Ansprüche 1 oder 2,
**dadurch gekennzeichnet,**
**dass** das aus den Abläufen (Z1..Z4; ZÜ1..ZÜ4) und aus der den Abläufen zugeordneten Verknüpfungslogik (LF1..LF3) gebildete Datenprogramm (DP) mit der ablauforientierten Verknüpfungslogik (AVL) auf einer einzigen Datenablage basiert.

4. System nach einem der Ansprüche 1 bis 3,
**dadurch gekennzeichnet,**
**dass** der Ablaufplan (AP) aus Zuständen (Z1..Z4) und Zustandsübergängen (ZÜ1..ZÜ4) gebildet wird, wobei einem Zustand (Z1..Z4) und/oder einem Zustandsübergang (ZÜ1..ZÜ4) eine Lupenfunktion (LF1..LF3) zuordenbar ist, die Verknüpfungen für den zugeordneten Zustand (Z1..Z4) und/oder für den zugeordneten Zustandsübergang (ZÜ1..ZÜ4) enthält.

5. System nach einem der Ansprüche 1 bis 4,
**dadurch gekennzeichnet,**
**dass** die durch die Lupenfunktion (LF1..LF3) editierbaren Verknüpfungen in einer Verknüpfungssprache und/oder in einer ablauforientierten Verknüpfungssprache realisiert sind.

6. System (PS) zur Programmierung und/oder zum Betreiben eines Automatisierungssystems (AS) mit
• ersten Mitteln (M1) zur Erzeugung einer Ablaufstruktur (AP) aus Zuständen (Z1..Z4) und Zustandsübergängen (ZÜ1..ZÜ4) zumindest für verfahrenstechnische Teilabläufe des Automatisierungssystems (AS), mit
• zweiten Mitteln (M2) zur Erzeugung von den Zuständen (Z1..Z4) und/oder den Zustandsübergängen (ZÜ1..ZÜ4) zuordenbaren Zusatzinformationen (ZI1..ZI3).

7. System nach Anspruch 6,
**dadurch gekennzeichnet,**
**dass** die mittels der ersten (M1), zweiten (M2) und dritten Mitteln erzeugte Ablaufstruktur (AP) ein Datenprogramm (DP) mit einer ablauforientierten Verknüpfungslogik bildet, das zum Ablauf auf mindestens einer speicherprogrammierbaren Steuerung (SPS1, SPS2) des Automatisierungssystems (AS) vorgesehen ist.

8. System nach einem der Ansprüche 6 oder 7,
**dadurch gekennzeichnet,**
**dass** zur Erzeugung der Ablaufstruktur erste Softwarekomponenten (SW11..SW1n) zur Kennzeichnung eines Zustandes (Z1..Zn) und/oder eines Zustandsübergangs (ZÜ1..ZÜ4) und zur Erzeugung der Zusatzinformationen (ZI1..ZI3) zweite Softwarekomponenten (..) vorgesehen sind.

9. System nach einem der Ansprüche 6 bis 8,
**dadurch gekennzeichnet,**
**dass** mindestens einem ersten Softwareobjekten eine Lupenfunktion zuordenbar ist, über die ein zweites Softwareobjekt editierbar ist.

10. System nach einem der Ansprüche 6 bis 9,
**dadurch gekennzeichnet,**
**dass** das System (PS) als erste Softwareobjekte einen ersten Objekttyp "Aktion" zur Kennzeichnung eines Zustandes (Z) und einen zweiten Objekttyp "Transition" zur Kennzeichnung eines Zustandsübergangs (ZÜ) aufweist.

11. System nach einem der Ansprüche 6 bis 10,
**dadurch gekennzeichnet,**
**dass** die ersten, zweiten und dritten Mittel (M1, M2, M3) in der Weise ausgestaltet sind, dass Entwurf, Programmierung und Dokumentation der Ablaufstruktur im wesentlichen in einem Arbeitsschritt erfolgt.

12. System nach einem der Ansprüche 6 bis 11,
**dadurch gekennzeichnet,**
**dass** Entwurf, Programmierung und Dokumentation der Ablaufstruktur auf einer einzigen Datenablage basieren.

13. Verfahren zur Programmierung und/oder zum Betreiben eines Automatisierungssystems (AS), bei dem mit eine Ablaufstruktur (AP) aus Zuständen (Z1..Z4) und Zustandsübergängen (ZÜ1..ZÜ4) zumindest für verfahrenstechnische Teilabläufe des Automatisierungssystems (AS) erzeugt wird, wobei den Zuständen (Z1..Z4) und/oder den Zustandsübergängen (ZÜ1..ZÜ4) Zusatzinformationen (ZI1..ZI3) insbesondere in Form einer Verknüpfungslogik zuordenbar sind.

14. Computerprogrammprodukt mit einem System zur Programmierung und/oder zum Betreiben eines Automatisierungssystems (AS) nach einem der Ansprüche 1 bis 12.
